(19) Europäisches Patentamt

European Patent Office

Office européen des brevets

(11) Veröffentlichungsnummer: **0 196 722 B1**

(12) **EUROPÄISCHE PATENTSCHRIFT**

(45) Veröffentlichungstag der Patentschrift: **29.01.92**

(21) Anmeldenummer: **86200504.8**

(22) Anmeldetag: **26.03.86**

(51) Int. Cl.⁵: **H04N 9/66,** H04N 9/44, H04N 11/14

(54) **Fernsehempfänger mit einer Schaltungsanordnung zur Demodulation eines NTSC-codierten Farbsignals.**

(30) Priorität: **29.03.85 DE 3511440**

(43) Veröffentlichungstag der Anmeldung:
**08.10.86 Patentblatt 86/41**

(45) Bekanntmachung des Hinweises auf die Patenterteilung:
**29.01.92 Patentblatt 92/05**

(84) Benannte Vertragsstaaten:
**DE FR GB**

(56) Entgegenhaltungen:
**EP-A- 0 111 981**
**DE-B- 2 129 820**
**US-A- 3 688 019**
**US-A- 3 820 157**
**US-A- 4 216 493**

(73) Patentinhaber: **Philips Patentverwaltung GmbH**
**Wendenstrasse 35 Postfach 10 51 49**
**W-2000 Hamburg 1(DE)**
(84) Benannte Vertragsstaaten:
**DE**

Patentinhaber: **N.V. Philips' Gloeilampenfa-brieken**
**Groenewoudseweg 1**
**NL-5621 BA Eindhoven(NL)**
(84) Benannte Vertragsstaaten:
**FR GB**

(72) Erfinder: **Warmuth, Leo**
**Osterstrasse 156**
**W-2000 Hamburg 19(DE)**
Erfinder: **Johanndeiter, Martin**
**Schönweg 2**
**W-2000 Hamburg 61(DE)**
Erfinder: **Raven, Jan**
**Sparrenlaan 42**
**NL-5553 DA Valkenswaard(NL)**

(74) Vertreter: **Hartmann, Heinrich, Dipl.-Ing. et al**
**Philips Patentverwaltung GmbH Wenden-strasse 35 Postfach 10 51 49**
**W-2000 Hamburg 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Fernsehempfänger zur Demodulation eines als Folge digitaler Werte vorliegenden NTSC-codierten Farbsignals, mit einem zwei um 90° gegeneinander verschobene farbträgerfrequente Oszillatorsignale erzeugenden Oszillator, der einen Akkumulator mit einem Register und mit einem (ersten) Modulo- Addierer und einen Signalumformer umfaßt, der aus dem Akkumulatorausgangssignal die Oszillatorsignale bildet und mit einer die Periode der Oszillatorsignale steuernden Phasenvergleichsschaltung, der während des Auftretens des Farbsynchronsignals wenigstens eines der in einem Demodulator durch Multiplikation des Farbsignals mit den Oszillatorsignalen gebildeten Signale zugeführt wird.

Eine solche Schaltungsanordnung ist bekannt aus der Collection of papers of the 15th annual conference of SMPTE in San Francisco, february 1981, S. 200-209, Titel: Digital Decoding of PAL and NTSC Signals Using Field Delay Comb Filters and Line-Locked Sampling, Autor: C.K.P. Clarke. Für die Demodultion des Farbsignals ist es notwendig, daß der Oszillator in Frequenz und Phase so geregelt wird, daß dessen Phase mit der Phase des Farbsynchronsignals übereinstimmt. Bei NTSC-codierten FBAS-Signalen verändert sich auf der Übertragungsstrecke häufig die Phasenlage des Farbsignals gegenüber dem Farbsynchronsignal, da das Farbsynchronsignal immer auf einem konstanten Grundpegel, nämlich auf der hinteren Schwarzschulter liegt, das Farbsignal aber dem ständig schwankenden Helligkeitssignal überlagert ist. Eine solche Phasenverschiebung des Farbsignals gegenüber dem Farbsynchronsignal wird im wiedergegebenen Bild als Farbtonveränderung sichtbar. In der bekannten Schaltungsanordnung ist keine Möglichkeit vorgesehen, diese Phasenfehler auszugleichen.

In NTSC-Fernsehempfängern wird häufig die Phasenlage des Farbsynchronsignals eingestellt, um damit die z.B. auf der Übertragungsstrecke aufgetretene Phasenverschiebung zwischen Farbsignal und Farbsynchronsignal rückgängig zu machen. Aus der europäischen Patentanmeldung EP-A-00 67 899 ist z.B. eine Schaltungsanordnung bekannt, in der das Ausgangssignal der Phasenvergleichsschaltung über einen Digital-Analog-Umsetzer dem analogen Oszillator zugeführt wird und in der die Phasenverschiebung von einem Benutzer eines Fernsehempfängers ausgeregelt werden kann. Durch die Handeinstellung wird die Kennlinie der Phasenvergleichsschaltung beeinflußt und für das Farbsynchronsignal eine andere Sollphasenlage festgelegt.

Der Erfindung liegt die Aufgabe zugrunde, eine Schaltungsanordnung der eingangs genannten Art so auszubilden, daß die Phasenverschiebung zwischen Farbsignal und Farbsynchronsignal auf eine andere Art eingestellt wird.

Diese Aufgabe wird erfindungsgemäß dadurch gelöst, daß in einer ersten Stellung eines Umschalters, zu dem Akkumulatorausgangssignal in einem zweiten Addierer ein die Phasenlage der Oszillatorsignale beeinflussender einstellbarer Wert addiert wird und das Addiererausgangssignal des zweiten Addierers dem Signalumformer zugeführt wird und daß der Umschalter nur während des Auftretens des Farbsynchronsignals in einer zweiten Stellung liegt, in der das unveränderte Akkumulatorausgangssignal dem Signalumformer zugeführt wird.

In der erfindungsgemäßen Schaltungsanordnung wird nur während der Zeit in der das Farbsynchronsignal auftritt, das Ausgangssignal der Phasenvergleichsschaltung der Phasenlage des Farbsynchronsignals angepaßt. Während der restlichen Zeit liegt ein konstanter Wert am Eingang des Akkumulators, der daraus ein sägezahnförmiges Signal bildet, dessen Frequenz und Phase von diesem konstanten Wert abhängig ist. Liegt eine Phasenverschiebung zwischen Farbsignal und Farbsynchronsignal vor, so wird ein einstellbarer Wert dem zweiten Addierer zugeführt, wodurch die Phase des sägezahnförmigen Signals verschoben wird. Während der Zeit in der das Farbsynchronsignal auftritt, wird kein einstellbarer Wert dem sägezahnförmigen Signal hinzugefügt, damit das Farbsynchronsignal mit richtiger Phasenlage demoduliert wird.

In einer ersten Weiterbildung der Erfindung ist vorgesehen, daß der Umschalter am Eingang des Signalumformers angeordnet ist und daß in der ersten Stellung der Ausgang des zweiten Addierers und in der zweiten Stellung der Ausgang des Akkumulators mit dem Eingang des Signalumformers verbunden ist. In einer zweiten Weiterbildung der Erfindung ist vorgesehen, daß über den Umschalter nur in der ersten Stellung der einstellbare Wert dem zweiten Addierer zugeführt wird. Aus den beiden Weiterbildungen der Erfindung wird deutlich, daß der Umschalter an einem der beiden Eingänge des zweiten Addierers liegen kann.

Damit vereinzelnd vorkommende Störungen des Farbsynchronsignals nicht sofort auf den Oszillator einwirken, ist vorgesehen, daß zwischen Phasenvergleichsschaltung und Oszillator ein Tiefpaß angeordnet ist.

Die zur Demodulation notwendigen Oszillatorsignale werden im Signalumformer erzeugt, der einen Festwertspeicher umfaßt, in dem aus dem Eingangssignal ein Sinus- und ein Kosinussignal gebildet werden.

Für die vom Benutzer gewünschte Farbtonveränderung, d.h. die Phasenlage zwischen Farbsignal und Farbsynchronsignal soll verändert werden, ist ein vom Benutzer einstellbarer Digitalwertgeber vorgesehen, der den einstellbaren Wert erzeugt.

Da das Farbsynchronsignal im Gegengatz zum Farbsignal auf der Übertragungsstrecke keine Phasenverschiebung erfährt und die Phasenlage des Farbsynchronsignals daher als Vergleichswert für die Oszillatorsignale dienen kann, ist vorgesehen, daß zwischen Demodulator und Phasenvergleichsschaltung wenigstens ein nur während des Auftretens des Farbsynchronsignals geschlossener Schalter angeordnet ist.

Die im Fernsehempfänger übliche Abtrennschaltung erzeugt aus dem FBAS-Signal einen Farbsynchronaustastimpuls, mit dem der Schalter und der Umschalter gesteuert werden.

Anhand der Zeichnungen werden im folgenden Ausführungsbeispiele der Erfindung beschrieben. Es zeigt:

Fig. 1     eine erfindungsgemäße Schaltungsanordnung mit einem ersten Ausführungsbeispiel des Oszillators und

Fig. 2     ein zweites Ausführungsbeispiel des Oszillators.

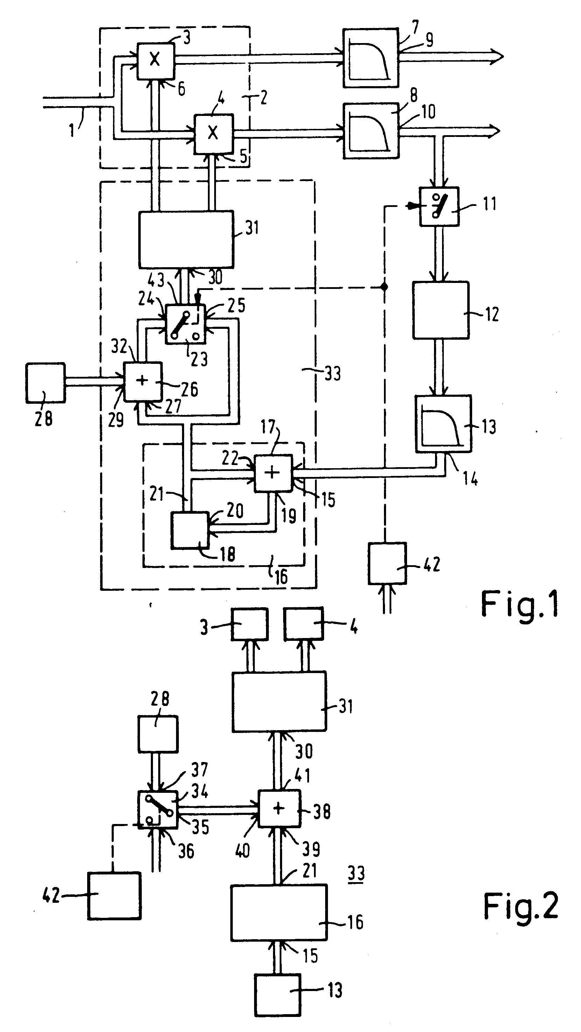

In Fig. 1 wird einem Eingang 1 eines Demodulators 2 das als Folge binär codierter Abtastwerte vorliegende NTSC-codierte Farbartsignal, das sich aus dem Farbsynchronsignal und dem Farbsignal zusammensetzt, zugeführt, das aus dem digitalen NTSC-FBAS-Signal (Fernsehsignal) gewonnen wurde. Das FBAS-Signal hat zuvor die in einem Fernsehempfänger üblichen nicht näher dargestellten Signalstufen wie Tuner, Bild-Zwischenfrequenzfilter und -Demodulator durchlaufen und ist in einem auch nicht näher dargestellten Analog-Digital-Umsetzer, dessen Abtastfrequenz z.B. 13,5 MHz beträgt, in ein digitales Signal mit einer Auflösung von z.B. 8 Bit umgesetzt worden. Der Demodulator 2 umfaßt zwei Multiplizierer 3 und 4, die jeweils mit dem Eingang 1 verbunden sind und denen jeweils zwei Oszillatorsignale zugeführt werden. Einem Eingang 5 des Multiplizierers 4 wird beispielsweise ein sinusförmiges Oszillatorsignal und einem Eingang 6 des Multiplizierers 3 ein kosinusförmiges Oszillatorsignal zugeführt. Dem Multiplizierer 3 ist ein Tiefpaß 7 und dem Multiplizierer 4 ein Tiefpaß 8 nachgeschaltet, die jeweils die durch Modulation entstandenen höherfrequenten Signalanteile ausfiltern. Am Ausgang 9 des Tiefpasses 7 liegt dann das Farbdifferenzsignal V und am Ausgang 10 des Tiefpasses 8 das Farbdifferenzsignal U vor.

Der Ausgang 10 des Tiefpasses 8 ist mit einem Schalter 11 verbunden, der während der Farbsynchronsignalaustastzeit geschlossen ist. Die Farbsynchronsignalaustastzeit entspricht der Zeit in der das Farbsynchronsignal vorliegt. Gesteuert wird der Schalter 11 von einer in einem Fernsehempfänger üblichen und bekannten Abtrennschaltung 42, die aus dem digitalen FBAS-Signal z.B. Horizontalimpulse, Vertikalimpulse und auch den dem Schalter 11 zugeführten Farbsynchronaustastimpuls erzeugt. Dem Schalter 11 ist eine Phasenvergleichsschaltung 12 nachgeschaltet, die ein Ausgangssignal entsprechend der Phasenlage zwischen Farbsynchronsignal und Oszillatorsignalen abgibt. Dieses Ausgangssignal wird einem Tiefpaß 13 zugeführt, der vereinzelt auftretende Signalstörungen unterdrückt.

Der Ausgang 14 des Tiefpasses 13 ist mit einem Eingang 15 eines Akkumulators 16 verbunden. Der Akkumulator 16 umfaßt einen (ersten) Modulo-Addierer 17, und ein Register 18. Der Eingang 15 des Akkumulators 16 ist auch ein Eingang des ersten Addierers 17. Der Ausgang 19 des ersten Addierer 17 ist mit dem Eingang 20 des Registers,18 verbunden und der Ausgang 21 des Registers 18, der auch ein Ausgang des Akkumulators 16 ist, ist mit einem zweiten Eingang 22 des ersten Addierers 17 verbunden.

Der Ausgang 21 des Akkumulators 16 ist mit einem Eingang 27 eines zweiten Addierers 26 und mit einem Eingang 25 eines Umschalters 23 verbunden. Dem zweiten Eingang 29 des zweiten Addierers 26 wird ein digitales Signal von einem Digitalwertgeber 28 zugeführt, der von einem Benutzer eingestellt wird. Der Ausgang 32 des zweiten Addierers 26 ist mit einem Eingang 24 des Umschalters 23 verbunden. Über den Ausgang 43 des Umschalters 23 wird dem Eingang 30 eines Signalumformers 31 das Ausgangssignal des Umschalters 23 zugeführt. Der Umschalter 23 verbindet während der Farbsynchronsignalaustastzeit den Eingang 25 mit dem Ausgang 43 (zweite Stellung) und während der restlichen Zeit den Eingang 24 mit dem Ausgang 43 (erste Stellung). Der Umschalter 23 wird auch von der Abtrennschaltung 42 mit Hilfe des Farbsynchronaustastimpulses gesteuert.

Der Signalumformer 31 umfaßt einen Festwertspeicher, der aus dem Eingangssignal zwei sinusförmige Oszillatorsignale bildet, die den Multiplizierern 3 und 4 zugeführt werden. Der Akkumulator 16, der Umschalter 23, der zweite Addierer 26 und der Signalumformer 31 bilden einen digitalen Oszillator 33.

Außer dem digitalen Oszillator 33 werden den Tiefpässen 7, 8 und 13 und dem Phasendiskriminator 12 jeweils ein Taktsignal zugeführt, dessen Frequenz gleich der Abtastfrequenz ist.

Die Funktionsweise des digitalen Oszillators 33 wird im folgenden erläutert. Im ersten Addierer 17 des Akkumulators 16 wird das Eingangssignal des digitalen Oszillators 33 und das Ausgangssignal des Registers 18 addiert, das das um eine Taktperiode verzögerte Ausgangssignal des zweiten Addierers 17 ist. Es wird also zum Ausgangssignal des Addierers 17 immer das Eingangssignal hinzuaddiert und bei einem konstanten Eingangssignal ergibt sich ein linear ansteigendes Ausgangssignal. Da der Addierer 17 eine begrenzte Wortlänge hat (Modulo-Addierer), tritt nach einer Anzahl von Additionen im Addierer 17 ein Überlauf auf, d.h. wenn die Summe der Werte an den Eingängen 15 und 22 den größten darstellbaren Wert am Ausgang 19 überschreitet, erscheint dort nur die Differenz zwischen diesem Summenwert und dem größten darstellbaren Wert. Während der nächsten Taktperioden wird das Ausgangssignal des Registers 18 jeweils um den Wert, der am Eingang 15 liegt, erhöht und bis zu einem erneuten Überlauf des Addierers 17 ergibt sich eine linear ansteigende Kurve. Am Ausgang 21 des Akkumulators erscheint also eine sägezahnförmige Kurve, die eine konstante Periode aufweist, wenn das Eingangssignal einen konstanten Wert aufweist. Die Phase und Frequenz dieses sägezahnförmigen Signals läßt sich verändern, indem das Eingangssignal des Akkumulators 16 erhöht oder erniedrigt wird.

In der zweiten Stellung des Umschalters 23 wird das Ausgangssignal des Akkumulators 16 direkt dem Signalumformer 31 zugeführt. Der Signalumformer 31 wandelt das sägezahnförmige Signal in ein Sinus- und Kosinussignal um. Im Festwertspeicher des Signalumformers 31 sind die diskreten Werte einer Sinus- und Kosinuskurve abgespeichert. Die Eingangswerte des Signalumformers 31 sind die betreffenden Adressen dieser Speicherplätze, die also einen eindeutigen Zusammenhang zwischen der Sägezahnkurve und den beiden sinusförmigen Ausgangssignalen des Signalumformers 31 herstellen. In der ersten Stellung des Umschalters 23 wird dem Signalumformer 31 das vom zweiten Addierer 26 beeinflußte Ausgangssignal des Akkumulators 16 zugeführt. Am Eingang 29 des zweiten Addierers 26 liegt ein konstanter Wert an, der dem Ausgangssignal des Akkumulators 16 hinzugefügt wird und eine Phasenverschiebung des sägezahnförmigen Signals bewirkt. Da das Ausgangssignal des Addierers 26 dann über den Umschalter 23 dem Signalumformer 31 zugeführt wird, ergibt sich auch eine Phasenverschiebung der beiden sinusförmigen Oszillatorsignale.

Der zweite Addierer 26 kann ein Modulo-Addierer sein, der die gleiche Wortlänge wie der erste Modulo-Addierer 18 besitzt. Im Signalumformer 31 muß dann jeweils nur die Periode einer Sinus- und Kosinuskurve gespeichert sein. Durch die große Wortlänge im Akkumulator 16 kann die Frequenz sehr genau eingestellt werden. Wird die hohe Auflösung des Akkumulatorsausgangssignals für die Signalumformung nicht benötigt, so werden die niederwertigen Ausgänge des Akkumulators 16 nicht mit dem zweiten Addierer 26 und dem Eingang 25 des Umschalters 23 verbunden. Der Addierer 26 besitzt dann eine geringere Wortlänge, da die niederwertigen Bits wegfallen. Der zweite Addierer 26 kann auch eine größere Wortlänge als der erste Addierer 18 besitzen, so daß am Addierer 26 kein Überlauf mehr auftritt. Im Signalumformer 31 muß jedoch mehr als eine Periode einer Sinus- und Kosinuskurve abgespeichert werden.

Die Funktion der gesamten Schaltungsanordnung nach Fig. 1 wird im folgenden beschrieben. Nach der Demodulation und Tiefpaßfilterung liegt am Ausgang 10 während der Zeilenhinlaufzeit das Farbdifferenzsignal U und am Ausgang 9 das Farbdifferenzsignal V vor. Während eines Teiles der Zeilenrücklaufzeit liegt an beiden Ausgängen das demodulierte als Gleichwert auftretende Farbsynchronsignal vor. Ist die für die Demodulation vorgeschriebene Phasenlage zwischen den Oszillatorsignalen und dem Farbsynchronsignal gegeben, ist die Amplitude des nach der Demodulation als Gleichwert auftretenden Farbsynchronsignals am Ausgang 10 des Tiefpaßfilters 8 gleich Null. Liegt nun nicht die vorgeschriebene Phasenlage vor, so ist der Betrag der Amplitude des demodulierten Farbsynchronsignals nicht gleich Null. Während der Farbsynchronsignalaustastzeit ist der Schalter 11 geschlossen, so daß die Phasenvergleichsschaltung 12 die Phasenlage des Farbsynchronsignals bestimmen kann. Es ist auch möglich aus dem Farbdifferenzsignal V oder auch aus beiden Farbdifferenzsignalen U und V die Phasenlage zu bestimmen. Die Phasenvergleichsschaltung 12 führt über den Tiefpaß 13 dem Akkumulator 16 bei vorgeschriebener Phasenlage zwischen dem Farbsynchronsignal und dem Oszillatorsignal ein positives konstantes Signal zu, das bei einer Phasenverschiebung erhöht oder vermindert wird. Im Oszillator 33 wird das Ausgangssignal des Akkumulators 16 über den in der zweiten Stellung liegenden Umschalter 23, also unverändert dem Signalumformer 31 zugeführt.

Nach der Farbsynchronsignalaustastzeit wird der Schalter 11 geöffnet und das Ausgangssignal der Phasenvergleichsschaltung 12 nicht mehr verändert. Da sich bei NTSC-codierten Farbsignalen häufig die vorgeschriebene Phasenlage des Farbsignals gegenüber dem Farbsynchronsignal auf der Übertragungsstrecke ändert und diese Phasenverschiebung im wiedergegebenen Bild als Farbtonveränderung sichtbar wird, ist es bei NTSC-Systemen möglich, diese Phasenverschiebung durch den Benutzer rückgängig zu machen. Nach der Farbsynchronsignalaustastzeit ist der Umschalter 23 in der ersten Stellung und das Ausgangssignal des Akkumulators 16 wird über den zweiten Addierer 26 dem Signalumformer 31 zugeführt. Ist eine Phasenverschiebung auf der Übertragungsstrecke aufgetreten, kann diese rückgängig gemacht werden, indem im Digitalwertgeber 28 vom Benutzer ein Wert eingestellt wird, der dem Ausgangssignal des Akkumulators 16 im zweiten Addierer 26 hinzugefügt wird und so die Phasenverschiebung ausgleicht.

Nur während der Farbsynchronsignalaustastzeit wird der Oszillator 33 von der Phasenvergleichsschaltung 12 geregelt und während der restlichen Zeit kann die auf der Übertragungsstrecke aufgetretene Phasenverschiebung vom Benutzer durch Einstellung des Digitalwertgebers rückgängig gemacht werden.

In Fig. 2 ist eine zweite Ausführungsform des Oszillators dargestellt. Die Schaltungselemente mit den gleichen Funktionen wie in Fig. 1 sind mit denselben Bezugszeichen versehen. Das Ausgangssignal des Akkumulators 16 wird über einen ersten Eingang 39 einem zweiten Addierer 38 zugeführt. Der zweite Eingang 40 des zweiten Addierers 38 ist mit einem Ausgang 35 eines Umschalters 34 verbunden. In einer ersten Stellung ist der Umschalter 34 mit dem Eingang 37 verbunden, dem ein Signal vom Digitalwertgeber 28 zugeführt wird und in einer zweiten Stellung mit einem Eingang 36, an dem kein Signal anliegt. Der Ausgang 41 des zweiten Addierers 38 ist mit dem Eingang 30 des Signalumformers 31 verbunden.

Während der Farbsynchronsignalaustastzeit liegt der Umschalter 34 in seiner zweiten Stellung und das Ausgangssignal des Akkumulators 16 wird unbeeinflußt dem Signalumformer 31 zugeführt. Während der restlichen Zeit liegt der Umschalter in seiner ersten Stellung und führt dem zweiten Eingang des Addierers 38 einen im Digitalwertgeber 28 eingestellten Wert zu.

## Patentansprüche

1. Fernsehempfänger mit einer Schaltungsanordnung zur Demodulation eines als Folge digitaler Werte vorliegenden NTSC-codierten Farbsignals, mit einem zwei um 90° gegeneinander verschobene farbträgerfrequente Oszillatorsi-gnale erzeugenden Oszillator (33), der einen Akkumulator (16) mit einem Register (18) und mit einem (ersten) Modulo-Addierer (17) und einen Signalumformer (31) umfaßt, der aus dem Akkumulatorausgangssignal die Oszillatorsignale bildet und mit einer die Periode der Oszillatorsignale steuernden Phasenvergleichsschaltung (12), der während des Auftretens des Farbsynchronsignals wenigstens eines der in einem Demodulator (2) durch Multiplikation des Farbsignals mit den Oszillatorsignalen gebildeten Signale zugeführt wird, dadurch gekennzeichnet, daß in einer ersten Stellung eines Umschalters (23) zu dem Akkumulatorausgangssignal in einem zweiten Addierer (26, 38) ein die Phasenlage der Oszillatorsignale beeinflussender, einstellbarer Wert addiert wird und das Addiererausgangssignal des zweiten Addierers dem Signalumformer (31) zugeführt wird und daß der Umschalter (23) nur während des Auftretens des Farbsynchronsignals in einer zweiten Stellung liegt, in der das unverän-derte Akkumulatorausgangssignal dem Signal-umformer (31)zugeführt wird.

2. Fernsehempfänger nach Anspruch 1, dadurch gekennzeichnet, daß der Umschalter (23) am Eingang (30) des Signalumformers (31) angeordnet ist und daß in der ersten Stellung der Ausgang (32) des zweiten Addierers (26) und in der zweiten Stellung der Ausgang (21) des Akkumulators (16) mit dem Eingang (30) des Signalumformers (31) verbunden ist.

3. Fernsehempfänger nach Anspruch 1, dadurch gekennzeichnet, daß über den Umschalter (34) nur in der ersten Stellung der einstellbare Wert dem zweiten Addierer (38) zugeführt wird.

4. Fernsehempfänger nach einem der vorhergehenden Ansprüche, dadurch gekennzeichnet, daß zwischen Phasenvergleichsschaltung (12) und Oszillator (33) ein Tiefpaß (13) angeordnet ist.

5. Fernsehempfänger nach einem der vorhergehenden Ansprüche, dadurch gekennzeichnet, daß der Signalumformer (31) einen Festwertspeicher umfaßt, der aus dem Eingangssignal ein Sinus- oder ein Kosinussignal bildet.

6. Fernsehempfänger nach einem der vorhergehenden Ansprüche, dadurch gekennzeichnet, daß ein vom Benutzer einstellbarer Digitalwertgeber (28) den einstellbaren Wert erzeugt.

7. Fernsehempfänger nach einem der vorhergehenden Ansprüche, dadurch gekennzeichnet, daß zwischen Demodulator (2) und Phasenvergleichsschaltung (12) wenigstens ein nur während des Auftretens des Farbsynchronsignals geschlossener Schalter (11) angeordnet ist.

8. Fernsehempfänger nach Anspruch 7, dadurch gekennzeichnet, daß eine Abtrennschaltung (42) aus dem FBAS-Signal einen Farbsynchronaustastimpuls erzeugt, mit dem der Umschalter (23, 34) und der Schalter (11) gesteuert werden.

## Claims

1. A television receiver including a circuit arrangement for demodulating an NTSC-coded chrominance signal available as a sequence of digital values, including an oscilLAtor (33) producing two oscillator signals at the chrominance subcarrier frequency and being shifted 90° relative to each other, the oscillator comprising an accumulator (16) incorporating a register (18) and a (first) modulo-adder (17) and a waveform converter (31), which forms the oscillator signals from the accumulator output signal, and a phase comparator circuit (12) controlling the period of the oscillator signals and receiving during the occurrence of the colour burst at least one signal produced in a demodulator (2) by multiplying the chrominance signal by the oscillator signals, characterized in that in a first position of a change-over switch (23) an adjustable value influencing the phase position of the oscillator signals is added in a second adder (26, 38) to the accumulator output signal and the adder output signal of the second adder is applied to the waveform converter (31) and in that the change-over switch (23) is in a second position only during the occurrence of the colour burst, in which second position the unchanged accumulator output signal is applied to the waveform converter (31).

2. A television receiver as claimed in Claim 1, characterized in that the change-over switch (23) is arranged at the input (30) of the waveform converter (31), while in in the first position the output (32) of the second adder (26) and in the second position the output (21) of the accumulator (16) is connected to the input (30) of the waveform converter (31).

3. A television receiver as claimed in Claim 1, characterized in that the adjustable value is applied to the second adder (38) via the change-over switch (34) in its first position only.

4. A television receiver as claimed in any one of the preceding Claims, characterized in that a low-pass filter (13) is arranged between the phase comparator circuit (12) and the oscillator (33).

5. A television receiver as claimed in any one of the preceding Claims, characterized in that the waveform converter (31) includes a read-only memory which produces a sine-shaped signal or a cosine-shaped signal from the input signal.

6. A television receiver as claimed in any one of the preceding Claims, characterized in that a user-adjustable digital value generator (28) produces the adjustable value.

7. A television receiver as claimed in any one of the preceding Claims, characterized in that at least one switch (11) which is closed only during the occurrence of the colour burst is arranged between the demodulator (2) and the phase comparator circuit (12).

8. A television receiver as claimed in Claim 7, characterized in that a separating circuit (42) produces a colour burst gating pulse from the composite colour television signal, by means of which the change-over switch (23, 34) and the switch (11) are controlled.

**Revendications**

1. Récepteur de télévision pourvu d'un montage de circuit destiné à la démodulation d'un signal de chrominance à codage NTSC présent sous la forme d'une séquence de valeurs numériques, comportant un oscillateur (33) produisant deux signaux d'oscillateur à fréquence de porteuse couleur décalés mutuellement de 90°, qui comprend un accumulateur (16) avec un registre (18) et un (premier) additionneur modulo (17) ainsi qu'un convertisseur de signal (31) qui forme les signaux d'oscillateur à partir du signal de sortie de l'accumulateur, et comportant un circuit comparateur de phase (12) commandant la période des signaux d'oscillateur auquel, pendant la présence du signal de synchronisation couleur, est appliqué au moins un des signaux formés dans un démodulateur (2) par multiplication du signal de chrominance par les signaux d'oscillateur, caractérisé en ce que, dans une première position d'un commutateur (23), une valeur réglable influençant la position de phase des signaux d'oscillateur est ajoutée au signal de sortie de l'accumulateur dans un second additionneur (26, 38) et le signal de sortie du second additionneur est appliqué au convertisseur de signal (31) et que le commutateur (23) ne se trouve que pendant la présence du signal de synchronisation couleur dans une seconde position dans laquelle le signal de sortie d'accumulateur inchangé est appliqué au convertisseur de signal (31).

2. Récepteur de télévision suivant la revendication 1, caractérisé en ce que le commutateur (23) est disposé à l'entrée (30) du convertisseur de signal (31) et que, dans la première position, la sortie (32) du second additionneur (26) et, dans la seconde position, la sortie (21) de l'accumulateur (16) sont connectées à l'entrée (30) du convertisseur de signal (31).

3.  Récepteur de télévision suivant la revendication 1, caractérisé en ce que la valeur réglable n'est appliquée au second additionneur (38), par l'intermédiaire du commutateur (34), que dans la première position.

4.  Récepteur de télévision suivant l'une quelconque des revendications précédentes, caractérisé en ce qu'un filtre passe-bas (13) est disposé entre le circuit comparateur de phase (12) et l'oscillateur (33).

5.  Récepteur de télévision suivant l'une quelconque des revendications précédentes, caractérisé en ce que le convertisseur de signal (31) comporte une mémoire morte qui forme, à partir du signal d'entrée, un signal sinusoïdal ou un signal cosinusoïdal.

6.  Récepteur de télévision suivant l'une quelconque des revendications précédentes, caractérisé en ce qu'un générateur de valeur numérique (28) réglable par l'utilisateur produit la valeur réglable.

7.  Récepteur de télévision suivant l'une quelconque des revendications précédentes, caractérisé en ce qu'au moins un interrupteur (11) qui n'est fermé que pendant la présence du signal de synchronisation couleur est disposé entre le démodulateur (2) et le circuit comparateur de phase (12).

8.  Récepteur de télévision suivant la revendication 7, caractérisé en ce qu'un circuit de sectionnement (42) produit, à partir du signal FBAS, une impulsion de sélection de synchronisation couleur par laquelle le convertisseur (23, 34) et l'interrupteur (11) sont commandés.

Fig.1

Fig.2